# EUROPEAN PATENT APPLICATION

(11) **EP 1 585 132 A1**
(43) Date of publication of application: **12.10.2005**
(21) Application number: 02789007.8
(22) Date of filing: 02.12.2002
(51) Int. Cl.: G11B 23/28, G11B 23/40, G06K 19/16, H04N 1/00, G06F 17/30

(54) **METHOD FOR THE AUTHENTICATION AND TAMPER PROTECTION OF THE CONTENTS OF AN OPTICAL DEVICE USED TO STORE DIGITAL DOCUMENTS AND/OR DIGITAL OBJECTS**

(71) Applicant: Oberwager Sain, Raul, Mexico, D.F. 11050 (MX)
(72) Inventor: Oberwager Sain, Raul, Mexico, D.F. 11050 (MX)
(74) Representative: Urizar Anasagasti, José Antonio
(86) International application number: PCT/MX2002/000111
(87) International publication number: WO 2004/051653

(57) **Abstract**

The invention relates to a method for validation and certification of digitised images of documents and/or digital objects contained on a standard optical storage device, such as a CD-ROM or DVD-ROM recorded in the WORM (WRITE ONCE READ MANY) system. The inventive method involves the application of holographic security label containing elements that identify the content of the device, the disc, and means which give validity thereto, for example, a stamp and/or a signature of a recognised person.

## Description

### TECHNICAL FIELD

This invention is related to a procedure to validate and certify the authenticity of the original documents converted into digitised images combined with digital objects such as audio recordings and / or video recordings, which can be contained in a conventional optical storage device such as a CD-ROM and / or DVD-ROM compact disc, which are recorded in a WORM system (WRITE ONCE READ MANY). This system consists of applying a holographic security label containing identification elements of the content of the device, the compact disc itself, and media that confer validity thereon, for example a seal and/or handwritten signature by an authorized person.

### BACKGROUND

Some items associated with a particular event, activity or person are often collected and kept by collectors, fans o all persons who can value them for various reasons such as historical interest or even for sentimental reasons.

Such is the cash, for example, with physical objects such as sporting goods that are usually associated with a particular event or activity, and can be autographed by acclaimed athletes, such as baseballs, for example. Such documents can be sold to collectors at a determined value due to its rarity or age.

Thus, a physical article can acquire a special value and provide an incentive for falsification. Consequently, there is a need to provide a system that is able to verify the authenticity of the physical article. This way, the economic value of the physical article can increase when it displays a certification by a recognized person or with a special power of attorney therefor.

One way that has prevailed for validating items physically is to attach an external device such as a "certificate of authenticity" (a certificate or letter that guarantees the authenticity of the autograph or the actual physical article). A certificate of authenticity can be drawn up before the physical article can be transferred from the holder at the time it is acquired, or even after the after the acquisition, as usually is the case, for example, in buying and selling pictorial art.
A certificate of authenticity can be based on the "authentication" by an expert in the area of interest, even years after having created the physical article. A certificate of this type only reflects, in the best of cases, the expert, educated opinion of the person who certifies, even though it is not an authentication based on witnesses.
To avoid this type of problem, "notarization" of the certification of authenticity has been proposed (Richard Albersheim, The Autograph Report: What's Selling And Alternatives To Card Shows" Tuff Stuff, November 1993, referred to in US patent 6,082,774, Sclauch 2000). This type of certificates of authenticity has a limited value recognized by experts in physically collectible items.
The fact that certificates of authenticity are not physically integrated into the physical items under discussion allows for easily disassociating the critical authentication data with respect to the physical item. In a worst case scenario, such certifications of authenticity can be lost or associated with another physical item, either by accident or by fraudulent action.
A proposed solution (US 5,267,756, Molee et al. 1993) describes an authentication system that includes a first hologram with a sole numerical code affixed to a physical item. A second hologram with the same numerical code is attached to a certificate of authenticity. The system is complemented by an entity that manages an on-line registry system in a master registry or list that contains the sole code number and information on the physical item which the number applies to. The system also includes external means for a buyer or purchaser to register the physical item by mail or telephone with the entity. These external media permit the purchaser to confirm the information on the physical item through that registry line.
Some of the descriptions found in previous art include using sophisticated automated fingerprint recognition technologies (US patent 6.356,649 Harkless et al 2002): authentication through the moire pattern intensity measure (US patent 6,249,588 Amidror et al. 2001); diffraction pattern type security devices, particularly for optical storage device surfaces (US patent 6,226,109 Tomkin et al. 2001); holographic authentication of graphic elements with high diffraction resolution (US patent 6,222,650 Long 2001). The foregoing are some of the most recent developments.

As can be seen in these examples, the previous art emphasizes using external means for authenticating a physical item, and little or nothing is said regarding the medium through which the physical item is self-authenticated.

In reference to the authentication of a particular type of items such as physical documents, developments in art are focused in the same line of ideas as physical collectors' items, that is, aggregated or adhered external media are applied to the covers or physical documents themselves to confer their validity upon them.

The external means under discussion can be a handwritten signature by an authority or recognized person, a seal, either by using ink or one that includes the engraving and even perforation of the physical documents and, more recently, by applying holographic labels with one or more elements to avoid falsification thereof. One recent case of authentication of physical documents is shown in US patent 6,111.9853 (Walker et al 2000), which describes a complete verification system by comparison of data inherent to the document under study, by using cryptographic computers.

These and other documents in a technical state show us a large variety of proposed modalities for authenticating physical items. All of them entail high technology solutions and, therefore, a high cost, thereby limiting their application to physical items in which incorporating such solutions is economically viable.

On the other hand, procedures for digitalization and massive storage of binary documents and/or binary objects in various types of support, either magnetic or optical, have been developed on a large scale in these recent years. They have been adopted as general procedures at many public or private offices, due to the huge advantage massive storage in devices represents that virtually do not occupy space, such as CD-ROM and DVD-ROM compact discs recorded in the WORM system. Although compact discs have not successfully reached the same level of popularity, there is still not internationally accepted and disseminated standard for recording DVDs with highly disseminated uses, particularly with resped to small and medium-sized offices or home applications.

Moreover, the development of operating computer systems, which permits handling "objects" (text, image, audio, and video, for example) have contributed to this expansion and popularity.

The digitalization of documents has large advantages, such as those presented below:
a) They allow for substantially reducing spaces assigned for physical collections of paper documents;
b) They reduce the risks of total or partial losses of original documents due to various causes such as damages or losses;
c) They allow for, in some cases, scrapping original documents, preferably for recycling them;
d) It is well known that collections of paper documents are prone to plagues of organisms that affect the integrity of the documents (for example, fungus). Digitalization allows for preventing this;
e) This can guarantee the integrity of the digitised copy of the documentation, based on the medium of storage used over extended periods such as one hundred years:
f) This can be incorporated into a database management system with possibilities for organizing, searching for and recovering, and printing such documentation.
g) Once documents are incorporated into an optical storage medium such as a WORM type compact disc, CD-ROM or DVD-ROM, and once they are printed or "burned", they become read-only devices that can not be altered.

### OBJECTIVES OF THE INVENTION

The purpose of this invention is to provide a procedure to certify the authenticity and inviolability of the content of a document optic storage device.

This invention is further intended to provide mediums to certify the content of a binary document optic storage device and/or binary objects, in accordance with the foregoing procedure.

Another purpose of this invention is for certification mediums to contain elements that make falsification impossible, thereby allowing for documents certified as such contained in the optical storage device to be able to be used as legally valid proof in those proceedings that require them as such.

This invention is also intended for such mediums of certification to show the attempts of violation that the storage device could be a target of.

Another purpose of this invention is to supply a procedure that allows for substantially reducing large quantities of paper documents, thereby retaining the integrity and validity of such documents, and is conducive to recycling those documents and aiding environmental protection.

### BRIEF DESCRIPTION OF THE DRAWINGS

Figure 1 is a flowchart of the procedure, subject of the invention.
Figure 2 is a flowchart of the modality of the invention procedure. In addition to digitised images, the optical storage device will contain another type of "objects" such as text, audio, and video.
Figure 3 is a front view of a security label of the type described for the procedure, subject of the invention.

### DETAILED DESCRIPTION OF THE DRAWINGS

Two large groups of technology have been described previously such as, on one hand, development relating to the validation or certification of the authenticity of a digital object by using various mediums and on the other hand, the possibility of storing large amounts of documents in compact, inalterable form, thus adding a series of advantages toward its management. However, in the at described above, the way to combine these two groups has not been successfully established for the purpose of authenticating digitised documentation, so that such documentation can substitute the original in various scenarios, including legal venues.

This invention, then, refers to a procedure for certification or validation of the authenticity of digitised documents and/or objects contained in an optical storage medium, such as a CD-ROM or DVD-ROM WORM. A description is given below of the preferred modality of the invention, by making annotations of some of the possibilities of altering the original procedure that can be useful in certain circumstances of use, which are also in the scope of invention.

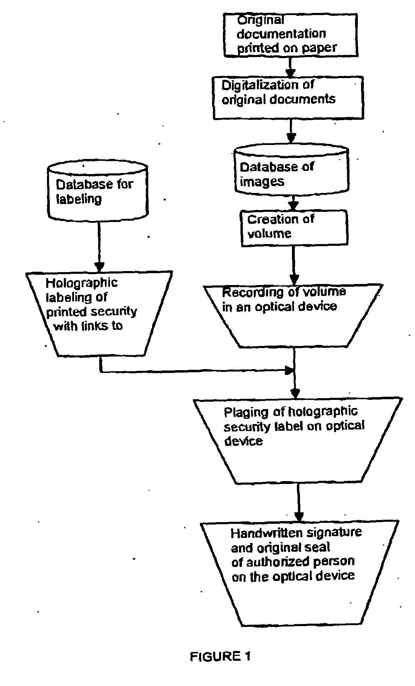

The basic procedure shown in Figure 1 consists basically of two stages: (a) production of the support medium of digitised information such as a compact disc; and (b) the addition of external mediums that validate or certify the content of the support medium.

The first stage is comprised of two steps-
1. Digitalization of original documents by any of the known mediums such as digitalization commonly known as a "scanner, or by using digital cameras and digital audios, for example, and/or the import of digital objects.
2. Creation of a database for managing digitised images and objects, and incorporating them into the structure of the DBMS (Database Management System)). This data base, in some modalities of the invention, can add indexes of text for searching for and recovering digital images and objects create links or incorporate functions in additional to the inherent functions of a management system.
3. Creation of a master exportable volume, including the DBMS, images, digital objects, indexes, links and, in some modalities, programs for self-starting and self-installation. This volume is limited in its extension by the capacity of the support medium selected where the final volume will reside, for example, more or less 600 megabytes for conventional CD-ROM WORM compact discs.
4. Recording or "burning" of the pertinent volume in the support medium selected, "closing" the medium once the recording process is concluded (that is, impede the possibility of adding to or changing its content).

The second stage consists of the following steps:
1. Creation of a database with the particular data of each volume created in the first stage, which will subsequently be incorporated into an identification label.
   The data that is recommended to be added to this database, so that the content of the volume is described completely and uniquely, includes:
   a) Volume identifier, series number or sole alphanumeric code, the physical series number that identifies the medium of support (generally part of the firmware or manufacturer identifier) of the compact disc.
   b) The total number of documents or digital folders contained in the volume.
   c) The total number of digital pages and/or digital objects in the volume.
   d) Date volume was recorded or created: and
   e) Size of the content in Megabytes, Gigabytes or any other adequate measurement.

   In one of the invention modalities, particularly when the volume is intended to have a status of documentary evidence before the legal authorities of a country, Including the name is recommended as well as, if applicable, a reference to the official identification such as a patent number, license or something similar, of the person who will certify the content of the optical storage device. This can entail a notary public, or an expert just to name some possibilities.
2. A printing of an "untransferable holographic security label" from the information stored in the database of the previous step, with respect to the volume that has been recorded.
3. Placing the untransferable holographic security label on the unrecorded face intended for that purpose, of the optical storage device In which the volume has been recorded.
4. Incorporation of the handwritten signature and/or original seal, if applicable, by the person who holds the necessary authority to validate, certify and/or authenticate the content of the optical storage device.

In order to carry out this last operation, the authorized person will generally have to compare the content of the optical storage device with the originals, in accordance with the legislation, standards, and regulations applicable to the case.

In another modality of the procedure of the invention, not only will the optical storage device only contain digitised images of documents, but it may also include another type of documents such as audio recordings and/or video recordings or those that (a) can technically be reduced to digital objects, and (b) can be considered of interest for the purposes for which the optical storage device can serve such as legal proof.

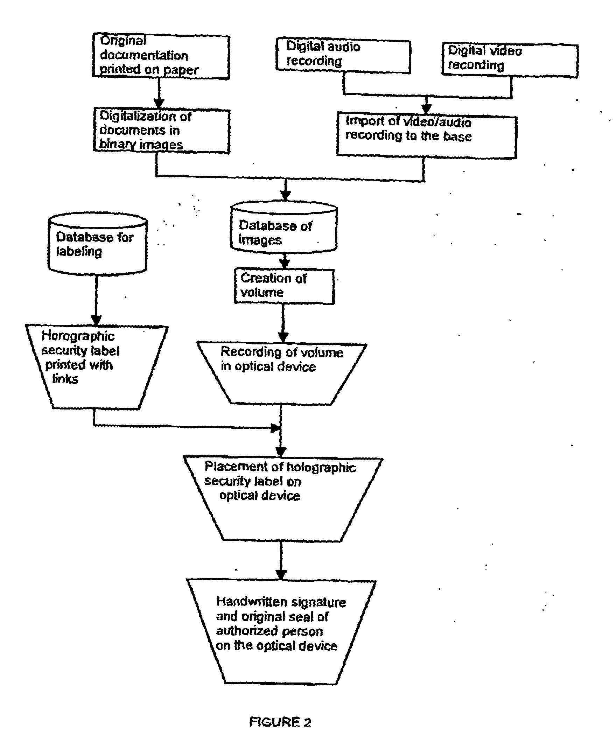

Figure 2 shows the alterations required in the first stage of the procedure to incorporate this type of "digital objects", which are restricted to importing the digital objects under discussion to the database from which the volume to be recorded will be created in the optical storage device.

Although the foregoing procedure can be followed with any database management system (DBMS), it is necessary to implement a base that contains the identification data required by legislation, regulations or standards in effect for the type of certification, validation or authentication that should be applied to the documentation under consideration. It will eventually be necessary to make adjustments to a basic database management system.

The procedure described above bases its usefulness on two significant points: (a) the use of an "untransferable holographic security label" with certain characteristics that will be described hereinbelow; and (b) the affixing of a handwritten signature and / or original seal by one person, such as an expert, witness, or notary public, who will confer validity to the label and, therefore, the object to which it is adhered, namely, the optical storage device. Normally an authorized person will be required to compare the content of the optical storage device with the documents originally processed. Once this is done, the digital copy acquires as much value as the original document, which may then be safeguarded appropriately or, if applicable, it may be disposed of in any other manner.

In turn, the digital copy can be assigned to a safe place that requires much less space than the original documentation and, therefore, saving resources. The issue of new certified copies is a process that practically does not consume resources, and the authentication process can be carried out as many times as needed, starting with the comparison with the original digital copy.

Incorporating one or several of the characteristics of the untransferable holographic security label, which are well known in the art, is recommended as follows:
1. In the hologram:
   a. Identification in the body of the label, whether a holographic micro text or a concealed image visible by using a laser pointer or similar device.
   b. Encrypted images.
   c. Sequential identification number.
2. In printed form:
   a. Security paper.
   b. Watermark.
   c. Visible and invisible fibrils, chemically treated for greater adhesion.
   d. Thermal chromatic inks.
   e. "Currency ink".
   f. Micro-texts.
   g. Magnetic folio or number.

An interesting development in the art of holographic labels is the use of differential adherence patterns that allow some zones of the label to adhere more strongly to the surface on which it is applied than others. Thus, when an attempt is made to take the label off to apply it to another surface, such as in our case, to falsify the disc by changing it for another one, these zones separate from the label and remain adhered to the original surface and creating hollow spots or holographic fragments on the surface below the label and on the previous view, thereby making the attempted violation evident. This is why in the preferred invention modality, it is recommendable to sue untransferable security holographic labels with the characteristics described above.

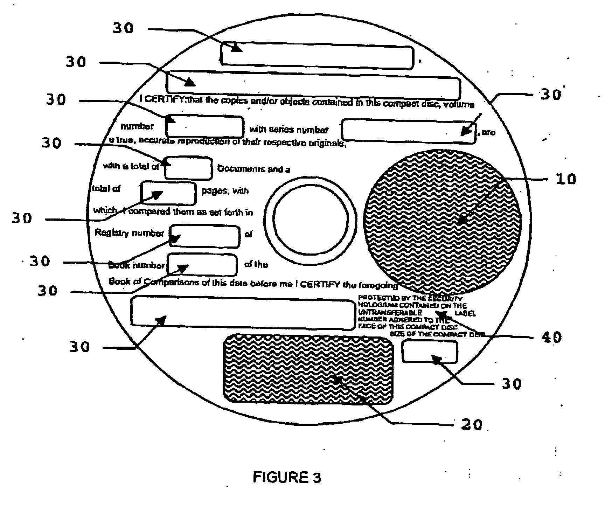

Figure 3 shows some of the characteristics of the untransferable security holographic label of the preferred invention modality, in which distribution and the number of elements is not restrictive. Instead, it is intended to illustrate the possibilities of using an untransferable holographic security label combined with the proposed procedure.

Numeral 10 indicates the area that has been designated for applying the original certification seal. Numeral 20 points out the area intended to receive the handwritten signature of the authorized person such as an expert, notary public or witness, etc. The different numerals 30 refer to the cells to which the various data of the database will be applied insofar as they have been described above, such as the volume identifier, the series number of the CD-ROM or DVD-ROM, the number of documents or files and all such data that should appear in the certification, in accordance with the pertinent legislation, regulations or standards. The numerals 30 also include the spaces in which the name and identification (license or patent) will appear of the person who certifies. The numeral 40 indicates the place in this example designated to show the identification number or series of the label itself, which will serve to maintain strict control over the intended use of each label produced.

It is worth noting that some captions have been kept in the body of the label of the example that are necessary to formalize the certification, which can vary according to the type of certification, validation or authentication involved, in accordance with the regulations in effect.

Once the invention is described, it is considered a novelty and the content of the following clauses is claimed as property:

## Claims

1. A procedure for the certification or validation of the authenticity of the digitised documents and/or digital objects contained in the optical storage medium. That procedure consists of the stages of:
a) The production of a supporting medium of the digitised information as such, but not restricted to a CD-ROM, DVD-ROM or similar devices; and
b) The addition of external mediums for which the content of the supporting medium is validated or certified.
**characterized** because the validation, certification or authentication of the authenticity of the content of the optical storage medium is achieved by incorporating the handwritten signature and/or original seal, if applicable, by the person who holds the necessary authority to validate, certify, and / or authenticate the content of the optical storage device.

2. The procedure for certifying or validating the authenticity of digitised documents contained in an optical storage medium, in conformity with the claim 1, **characterized in**sofar as the production of the supporting medium of the digitised information consists of the following steps.
a) Digitalization of the original documents and/or import of digital objects by any of the known mediums.
b) Creation of a database to manage digitised images.
c) Creation of a self-executable master volume, including the database, images and / or digital objects and indexes, links, and other elements required for its operation.
d) Recording or "burning" of the pertinent volume in the medium of support selected.

3. The procedure for certifying or validating the authenticity of digitised documents and /or digital objects contained in an optical storage medium, in conformity with claim 2, **characterized** because the database for managing digitised images and / or digital objects adds indexes and creates links for searching for, recovering, and managing images.

4. The procedure for certifying or validating the authenticity of digitised documents and /or digital objects contained in an optical storage medium, in conformity with claim 2, **characterized** because the database can also include other digital objects such as audio recordings and video recordings.

5. The procedure for certifying or validating the authenticity of digitised documents and /or digital objects contained in an optical storage medium, in conformity with claim 2, **characterized** because the master volume includes programs for self-starting or self-installation of the database.

6. The procedure for certifying or validating the authenticity of digitised documents and /or digital objects contained in an optical storage medium, in conformity with claim 2, **characterized** because the addition of external mediums, whereby the content of the supporting medium is validated or certified, consists of the following steps:
a) Creation of a database with the particular data of each volume including but not limited to:
i) Volume identifier.
ii) Series number of optical storage device.
iii) Total number of documents of files contained in the volume.
iv) Total number of pages and/or digital objects in the volume.
v) Date volume was recorded or created; and
vi) Size of the content in Megabytes, Gigabytes or any other adequate measurement.
b) Printing of a holographic label from the information stored in the database of the previous step, regarding the volume that has been recorded.
c) Placing the holographic label on the unrecorded face designated for that purpose, of the optical storage device in which the volume has been recorded.
d) Incorporating the handwritten signature and / or original seal of the person who holds the necessary authority to validate, certify and / or authenticate the content of the optical storage device.

7. The procedure for certifying or validating the authenticity of digitised documents and / or digital objects contained in an optical storage medium in conformity with claim 1, whereby the external mediums for which the content of the supporting medium is validated or certified, includes an untransferable holographic security label, **characterized by** having mediums that prevent the transfer of the label to another physical object, once it has been applied to a physical objed for the first time.

8. An untransferable holographic security label, in conformity with claim 7, **characterized** because the mediums that prevent the transfer of that label to another physical object consist in a plurality of zones that, on the adhesive face of the label, present an adhesive with stronger adherence than the rest of the surface of the label. This is why upon attempting to transfer the label from the first surface to the surface to which it has been adhered, these zones remain adhered to the first surface and are detached from the body of the label, which will now show hollow spaces or holographic segments on the upper holographic surface, thereby evidencing the attempted violation it has been a target of.

9. An untransferable holographic security label, in conformity with claim 8, **characterized by** including textual elements of a link between the application of digitalization and the untransferable holographic security label of the volume for which it is created, including at least various and preferably all of the following elements:
i)Control identifier of the label itself such as a series number.
ii) Volume identifier.
iii) Series number generated by applying the digitization of the optical storage device.
iv) Total number of documents of files contained in the volume.
v) Total number of pages and/or digital objects in the volume.
vi) Date volume was recorded or created; and
vii) Size of the content.
viii) Name and identification data of the person who Will certify the volume.
ix) A caption of certification of the content, in conformity with the provisions of the legislation, regulations or standards with respect to which the certification, validation or authentication of the volume will be carried out; and
x) Spaces designated for the handwritten signature and / or original seal of certification of the authorized person.

10. The procedure to certify or validate the authenticity of digitized documents and/or digital objects contained in an optical storage media according to claim 1, wherein the printing of the non-transferable security holographic label is done with data from the database created during the procedure itself, with data related to the recorded volume in read-only mode, giving a unique character.
